# EUROPÄISCHE PATENTSCHRIFT

(11) **EP 3 153 282 B1**
(45) Veröffentlichungstag und Bekanntmachung des Hinweises auf die Patenterteilung: **08.12.2021**
(21) Anmeldenummer: 15188565.4
(22) Anmeldetag: 06.10.2015
(51) Int. Cl.: B25J 15/00, G01R 27/26

(54) **GREIFVORRICHTUNG UND BETRIEBSVERFAHREN FÜR EINE GREIFVORRICHTUNG**
GRIPPING DEVICE AND OPERATING METHOD FOR A GRIPPING DEVICE
DISPOSITIF DE PRISE ET PROCÉDÉ DE FONCTIONNEMENT D'UN DISPOSITIF DE PRISE

(43) Veröffentlichungstag der Anmeldung: 12.04.2017
(73) Patentinhaber: J. Schmalz GmbH, 72293 Glatten (DE); TRUMPF Werkzeugmaschinen GmbH & Co. KG, 71254 Ditzingen (DE)
(72) Erfinder: Defranceski, Aline, 72160 Horb a.N (DE)
(74) Vertreter: DREISS Patentanwälte PartG mbB

(56) Entgegenhaltungen:
- DE-A1- 10 144 048
- JP-A- H04 293 250
- JP-A- 2001 267 400
- US-A- 6 024 393
- US-A1- 2011 199 093

## Beschreibung

### Beschreibung

Die Erfindung betrifft eine Greifvorrichtung gemäß dem Oberbegriff des Anspruchs 1 sowie ein Verfahren zum Betreiben einer Greifvorrichtung gemäß Anspruch 12.

Die genannten Greifvorrichtungen weisen eine Anlagefläche mit hieran vorgesehenen Greifmitteln auf, welche dazu ausgebildet sind, auf ein zu greifendes Werkstück eine Haltekraft zum Festhalten an der Anlagefläche auszuüben.

Derartige Greifvorrichtungen finden insbesondere Verwendung bei der Handhabung von Werkstücken, z.B. bei deren Bearbeitung. Hierbei müssen z.B. einzelne Werkstücke mittels der Greifvorrichtung aus einem Verbund, z.B. aus einem Stapel oder Haufen, herausgelöst und aufgenommenwerden. Beim Ausschneiden oder Ausstanzen von Teilen aus einem schichtartigen Ausgangsmaterial müssen die ausgetrennten Teile gezielt aus einem von dem nicht benötigten Material gebildeten Restgitter herausgelöst und aufgenommen werden.

Hierbei kommen oftmals sogenannte Flächengreifer zum Einsatz, welche eine große Anlagefläche mit einer Mehrzahl von Greifeffektoren aufweisen, und mit welchen mehrere Werkstücke gleichzeitig aufgenommen werden können.

Um eine zuverlässige Überwachung des Greifvorgangs zu ermöglichen, soll feststellbar sein, ob ein Werkstück zuverlässig gegriffen ist und/oder ob ein gegriffenes Werkstück während seiner Handhabung an der Greifvorrichtung verbleibt. Außerdem ist es aus Effizienzgründen erwünscht, solche Greifmittel der Anlagefläche zu deaktivieren, an welchen kein Werkstück anliegt.

Dabei besteht ein Problem darin, dass die aufzunehmenden Werkstücke oftmals nur einen Teil der gesamten Anlagefläche überdecken. Außerdem müssen beispielsweise bei der Handhabung von ausgetrennten Teilen aus einem Restgitter verschiedene Werkstücke mit voneinander abweichenden Formen und Größen gegriffen werden. Auch die Position und Ausrichtung der Werkstücke an der Anlagefläche kann variieren, insbesondere wenn die Einzelteile in einem Nesting-Verfahren aus einem Restgitter ausgeschnitten werden und weiterverarbeitet werden sollen. Außerdem sollen bei derartigen Handhabungsverfahren oftmals Werkstücke aus verschiedenartigen Materialien zum Einsatz kommen. Diese Umstände machen eine Detektion der Präsenz von Werkstücken an der Greifvorrichtung problematisch.

Die Dokumente US 6 024 393 A, JP 2001 267400 A, US 2011/199093 A1, DE 101 44 048 A1 und JP H04 293250 A beschreiben Handhabungsvorrichtungen, bei welchen Kapazitätsmessungen mittels Sensorelektroden erfolgen können, um den Handhabungsvorgang zu überwachen.

Die Aufgabe der vorliegenden Erfindung besteht darin, eine zuverlässige Überwachung des Greifvorgangs zu ermöglichen. Insbesondere soll die Überwachung für verschiedenartige Werkstück-Ausgestaltungen geeignet sein, z.B. hinsichtlich Form, Größe, Lage, Position oder Material der Werkstücke.

Diese Aufgabe wird durch eine Greifvorrichtung gemäß Anspruch 1 gelöst. Die Greifvorrichtung umfasst ein Basisteil, d.h. ein Bauteil, welches eine Greiferbasis bildet (zum Beispiel ein Gehäuse). Ferner umfasst die Greifvorrichtung eine Anlagefläche, an welche ein zu greifendes Werkstück herangeführt wird. Die Anlagefläche ist mit Greifmitteln versehen (insbesondere mehrere einzelne Greifeinrichtungen), welche zur Ausübung einer Haltekraft auf das Werkstück ausgebildet sind. Die Greifvorrichtung umfasst außerdem eine Messeinrichtung, welche dazu ausgebildet ist, die elektrische Kapazität der Anlagefläche zu messen.

Die Anlagefläche der Greifvorrichtung bildet insbesondere eine Kontaktfläche, welche das zu greifende Werkstück bei Greifvorgang berührt oder zumindest an das Werkstück angenähert wird. Bei Annäherung oder Berührung des Werkstückes ändert sich die elektrische Kapazität der Anlagefläche, welche insbesondere gegenüber elektrischer Erde oder gegenüber anderen Bauteilen der Greifvorrichtung gemessen wird. Die Messung der Kapazität kann beispielsweise über die Messung einer charakteristischen Ladezeit (RC-Zeit), einer Frequenzmessung in einem Schwingkreis mit der Kapazität der Anlagefläche o.ä. gemessen werden. Eine Änderung der gemessenen Kapazität kann die Präsenz eines Werkstückes anzeigen. Dadurch kann die Greifvorrichtung bedarfsgerecht angesteuert werden. Insbesondere können die Greifmittel kontrolliert aktiviert und deaktiviert werden, beispielsweise in solchen Bereichen, in denen kein Werkstück präsent ist. Insofern kann der Greifvorgang zuverlässig überwacht werden und die Energieeffizienz erhöht werden.

Die Anlagefläche ist elektrisch leitfähig ausgebildet. Dabei ist die Anlagefläche als plattenartiges Bauteil aus einem elektrisch leitfähigen Material ausgebildet. Denkbar ist auch, dass die Anlagefläche eine Beschichtung mit einem elektrisch leitfähigen Material aufweist.

Die Anlagefläche ist gegenüber dem Basisteil elektrisch isoliert. Hierfür kann beispielsweise ein Isolationsabschnitt zwischen Bauteil und Anlagefläche vorgesehen sein. Insbesondere ist die Anlagefläche mittels des Isolationsabschnitts mit dem Basisteil verbunden. Die Messeinrichtung ist zur Messung der elektrischen Kapazität der Anlagefläche gegenüber dem Basisteil ausgebildet. Beispielsweise kann die Messeinrichtung diejenige Kapazität messen, die zwischen dem Basisteil und der insbesondere elektrisch gegenüber dem Basisteil isolierten Anlagefläche gebildet ist.

Insbesondere ist das Basisteil elektrisch geerdet. Hierzu weist die Greifvorrichtung vorzugsweise einen Erdungsanschluss zur elektrischen Verbindung mit Erdung auf. Vorteilhaft kann auch sein, wenn auch etwaige andere Bauteile der Greifvorrichtung - außer zumindest einzelner Bereiche der Anlagefläche - elektrisch geerdet sind.

Um die Präsenz eines Werkstückes an verschiedenen Bereichen der Anlagefläche unterscheiden zu können, kann die Anlagefläche vorzugsweise mehrere Messzonen aufweisen, welche insbesondere elektrisch gegeneinander isoliert sind. Hierzu kann die Anlagefläche entsprechende Trennisolatoren aufweisen, welche Messzonen bilden und voneinander abgrenzen.

Vorzugsweise ist die Messeinrichtung dazu ausgestaltet, verschiedene Kapazitäten verschiedener Messzonen unabhängig voneinander zu messen. Denkbar ist auch, dass die Messeinrichtung dazu ausgestaltet ist, die Kapazität oder die Kapazitäten zu messen, welche verschiedene Messzonen gegeneinander aufweisen. Dadurch kann eine ortsaufgelöste Messung der Kapazität der Anlagefläche erzielt werden, was eine Feststellung der Positionen der detektierten Werkstücke an der Anlagefläche ermöglicht.

Eine Kapazitätsmessung kann insbesondere derart erfolgen, dass eine oder mehrere der Messzonen elektrische geerdet sind. Eine Kapazitätsmessung kann dann beispielsweise zwischen nicht-geerdeten Messzonen und den geerdeten Messzonen erfolgen.

Grundsätzlich kann die Anlagefläche von einem Bauteil aus einem zumindest bereichsweise leitfähigen Material gebildet sein und auch die elektrischen Abschnitte aufweisen.

Insbesondere kann vorteilhaft sein, wenn die Anlagefläche eine Beschichtung aus einem dielektrischen und insbesondere elektrisch nichtleitfähigen Material aufweist. Die Beschichtung ist vorzugsweise auf einer dem Werkstück zugewandten Seite angeordnet. Beispielsweise stellt die Beschichtung eine Kontaktfläche für das Werkstück bereit. Durch die dielektrische Beschichtung kann die Kapazität beeinflusst werden und so die Empfindlichkeit der Detektion eingestellt werden. Auch eine Anpassung der Messung an verschiedene Werkstückarten und Werkstückmaterialen ist möglich.

Die Greifmittel sind an der Anlagefläche angeordnet und/oder in die Anlagefläche integriert. Vorzugsweise umgreifen die Greifmittel eine Vielzahl von Greifeffektoren, welche an der Anlagefläche verteilt angeordnet sind. Insbesondere sind die Greifeffektoren in einem regelmäßigen Rasten angeordnet. Die Greifeffektoren können z.B. Saugöffnungen in der Anlagefläche umfassen. Denkbar ist auch, dass die Greifeffektoren jeweils einzelne Sauggreifeinrichtungen umfassen. Greifeffektoren können jedoch auch Nadelgreifeinrichtungen, Magnetgreifeinrichtungen oder ähnliches umfassen. Durch die Messung der Kapazität der Anlagefläche, insbesondere selektiv für verschiedene Bereiche der Anlagefläche, kann gezielt festgestellt werden, an welchen Bereichen der Anlagefläche ein Werkstück anliegt. Dies ermöglicht es, gezielt die nicht von dem Werkstück bedeckten Greifeffektoren zu deaktivieren. Dadurch kann die Energieeffizienz der Greifvorrichtung gesteigert werden.

Vorzugsweise umfasst die Greifvorrichtung eine Auswerteeinrichtung. Die Auswerteeinrichtung ist insbesondere dazu ausgebildet, die Messung der Kapazität zu steuern und/oder das entsprechende Messverfahren durchzuführen. Die Auswerteeinrichtung kann außerdem derart ausgestaltet sein, dass Messwerte für Kapazitäten in der Auswerteeinrichtung speicherbar sind und/oder dass mittels der Auswerteeinrichtung Änderungen der gemessenen Kapazität ermittelbar sind. Insbesondere kann die Auswerteeinrichtung auch derart ausgestaltet sein, dass Detektionsschwellwerte in ihr hinterlegt sind. Dadurch kann das nachfolgend noch näher erläuterte Verfahren durchgeführt werden.

Die Greifvorrichtung kann zusätzlich eine Signaleinrichtung zur Abgabe eines Signals umfassen. Die Signaleinrichtung kommuniziert insbesondere mit der Auswerteeinrichtung. Beispielsweise ist die Signaleinrichtung derart ausgestaltet, dass ein Signal ausgegeben wird, wenn die Präsenz eines Werkstückes detektiert wird, beispielsweise wenn die Änderung der Kapazität durch Annäherung des Detektionsschwellwert überschreitet, wie nachfolgend noch näher erläutert.

Die Greifvorrichtung ist vorzugsweise als Flächengreifer ausgebildet. Insbesondere ist die Anlagefläche eben ausgebildet. Derartige Flächengreifer dienen insbesondere zum lageweisen Ergreifen und Anheben von flächigen Gegenständen, zum Beispiels mattenartigen, flexiblen beziehungsweise biegeschlaffen Materialien wie Geweben oder Folien, oder auch für lagestabile Flachmaterialien wie beispielsweise Bretter oder Platten.

Die eingangs gestellte Aufgabe wird auch durch ein Verfahren zum Betreiben einer Greifvorrichtung gemäß Anspruch 9 gelöst, bzw. durch ein entsprechend ausgestaltetes Verfahren zur Überwachung eines Greifvorgangs. Das Verfahren dient insbesondere zum Betreiben einer Greifvorrichtung aufweisend ein Basisteil, eine Anlagefläche sowie an der Anlagefläche vorgesehene Greifmittel.

Bei dem Verfahren werden verschiedene Zyklen durchgeführt, nämlich zumindest wenigstens ein Kalibrierungszyklus und wenigstens ein Arbeitszyklus.

Der Kalibrierungszyklus umfasst insbesondere einen Schritt, bei welchem die Grundkapazität der Anlagefläche oder einer Messzone der Anlagefläche ohne Präsenz eines Werkstückes, das heißt in Abwesenheit eines Werkstückes, gemessen wird.

Der Kalibrierungszyklus umfasst folgende Schritte:
- Messung einer Grundkapazität der Anlagefläche gegenüber dem Basisteil ohne Präsenz eines Werkstückes; wobei die Anlagefläche gegenüber dem Basisteil elektrisch isoliert ist; und wobei der Arbeitszyklus die folgenden Schritte umfasst:
- Annähern von Anlagefläche (14) und Werkstück (42) aneinander;
- Messung einer Präsenzkapazität ( der Anlagefläche gegenüber dem Basisteil;
- Ermittlung einer Kapazitätsänderung zwischen Grundkapazität und Präsenzkapazität;
- Erzeugung eines Präsenzsignals in Abhängigkeit der Kapazitätsänderung.

Vorzugsweise wird das Präsenzsignal dann erzeugt, wenn die Kapazitätsänderung betragsmäßig größer ist, als ein z.B. in der Auswerteeinrichtung hinterlegter Detektionsschwellwert. Das Verfahren kann dadurch ausgestaltet sein, dass die Präsenzkapazität während des Annäherns von Anlagefläche und Werkstück aneinander und/oder vor und/oder während des Greifens des Werkstücks mit den Greifmitteln gemessen wird.

Insbesondere kann durch eine kontinuierliche Beobachtung der Kapazitätsänderung der Greifvorgang im Detail überwacht werden.

Insbesondere ist vorgesehen, dass während der Durchführung der Arbeitszyklen die zeitliche Veränderung der gemessenen Kapazität der Anlagefläche oder zumindest einzelner Messzonen der Anlagefläche überwacht wird. Selbstverständlich kann auch die zeitliche Veränderung der Kapazitätsänderungen überwacht werden. Die Überwachung erfolgt insbesondere daraufhin, ob sich bei Durchführung der Arbeitszyklen ein erwarteter Wert der Präsenzkapazität (oder eine erwartete Kapazitätsänderung) einstellt. Die erwarteten Werte können in einer entsprechenden Auswerteinrichtung hinterlegt sein. Die erwarteten Werte können z.B. angepasst an bekannte Eigenschaften der gehandhabten Werkstücke vorgegeben sein, insbesondere wenn stets gleichartige Werkstücke gehandhabt werden sollen. Dies ermöglicht eine kontinuierliche Überwachung des Greifvorgangs (condition monitoring). So kann z.B. festgestellt werden, ob die Greifmittel zum erwarteten Zeitpunkt während eines Arbeitszyklus Kontakt zum Werkstück erlangen. Auch kann während der Handhabung der Gegenstände in den Arbeitszyklen eine Qualitätskontrolle erfolgen. Beispielsweise kann dann, wenn der gemessene Wert von dem erwarteten Wert abweicht, auf eine Abweichung der Eigenschaften des gegriffenen Werkstückes geschlossen werden (z.B. abweichende Größe, Materialabweichung, Beschädigung)

Bei dem Verfahren wird vorzugsweise eine Vielzahl von Arbeitszyklen durchgeführt, wobei intermittierend zwischen einzelnen ausgewählten Arbeitszyklen jeweils wenigstens ein Kalibrierungszyklus durchgeführt wird. Insbesondere wird ein Kalibrierungszyklus jeweils nach einer Regelanzahl von durchgeführten Arbeitszyklen durchgeführt. Dadurch kann die Empfindlichkeit der Überwachung kontinuierlich an Veränderungen des Systems angepasst werden. Im Betrieb der Greifvorrichtung ist z.B. denkbar, dass sich durch Materialablagerungen oder Verschmutzungen an der Anlagefläche die Kapazitätsverhältnisse ändern. Durch intermittierende Durchführung von Kalibrierungszyklen kann die Detektionsgenauigkeit an solche Veränderungen angepasst werden.

Zur weiteren Ausgestaltung wird der Detektionsschwellwert in Abhängigkeit der in den Kalibrierungszyklen gemessenen Grundkapazitäten festgelegt. Es kann auch vorgesehen sein, dass der Detektionsschwellwert in Abhängigkeit der in verschiedenen Arbeitszyklen gemessenen Präsenzkapazitäten angepasst wird. Durch eine kontinuierliche Ermittlung von Grundkapazität und Präsenzkapazität kann ein selbstlernendes System realisiert werden.

Zur weiteren Ausgestaltung sind mehrere verschiedene Detektionsschwellwerte vorgesehen und z.B. in der Auswerteeinrichtung hinterlegt. Ein Präsenzsignal wird insbesondere dann erzeugt, wenn die ermittelte Kapazitätsänderung (z.B. betragsmäßig) größer ist als wenigstens einer der Detektionsschwellwerte. Dabei kann vorgesehen sein, dass die konkrete Ausgestaltung des Präsenzsignals abhängig davon ist, welche Detektionsschwellwerte überschritten sind. Insofern können verschiedenen Detektionsschwellwerten verschiedene Auswerteergebnisse zugeordnet sein. Dies ermöglicht es, unterschiedliche Präsenzsignale in Abhängigkeit der Größe, Form, Lage, Position und Materialgestaltung des gegriffenen Werkstückes auszugeben. Auch kann festgestellt werden, ob ein Werkstück einen ungewollten Abstand zur Anlagefläche aufweist oder ob unerwünschte weitere Materialteile an dem Werkstück hängen. Insbesondere kann festgestellt werden, ob ein Werkstück noch mit einem umgebenden Material (zum Beispiel Restgitter) verbunden ist und nicht vollständig ausgelöst ist.

Die Erfindung wird im Folgenden anhand der Figuren näher erläutert.

Es zeigen:
- Figur 1: perspektivische Darstellung einer Greifvorrichtung mit Blick auf die Anlagefläche;
- Figur 2: Längsschnitt durch die Greifvorrichtung gemäß Figur 1;
- Figur 3: skizzierte Darstellung zur Erläuterung eines Verfahrens zum Betreiben der Greifvorrichtung;
- Figur 4: skizzierte Darstellung zur Erläuterung von Ausgestaltungen der Greifvorrichtung und des Verfahrens;
- Figur 5: skizzierte Darstellung zur Erläuterung der Kapazitätsänderungen.

In den Figuren und in der nachfolgenden Beschreibung sind für identische oder einander entsprechende Merkmale jeweils dieselben Bezugszeichen verwendet.

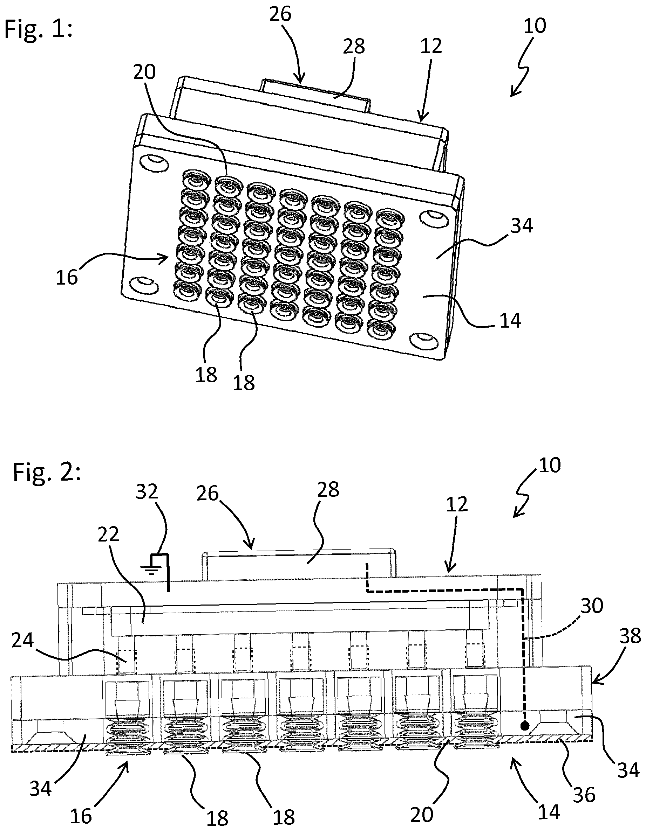

Die Figuren 1 und 2 zeigen eine Greifvorrichtung 10 mit einem Basisteil 12, welches z.B. ein Grundgehäuse der Greifvorrichtung 10 umfasst. Die Greifvorrichtung 10 weist eine Anlagefläche 14 auf, welche zur Handhabung eines Werkstückes an dieses herangeführt wird. An der Anlagefläche 14 sind Greifmittel 16 vorgesehen, mittels welchen eine Haltekraft auf ein Werkstück ausgeübt werden kann. Die Greifmittel 16 umfassen eine Vielzahl von Greifeffektoren 18, welche im dargestellten Beispiel als einzelne Sauggreifer ausgebildet sind, die in Saugöffnungen 20 der Anlagefläche 14 integriert sind. Die Saugöffnungen 20 und die Greifeffektoren 18 sind in einem regelmäßigen Rasten an der Anlagefläche 14 angeordnet.

Wie in Figur 2 angedeutet, können die einzelnen Greifeffektoren 18 (hier: Sauggreifer) an ein in der Greifvorrichtung 10 vorgesehenes Unterdruckverteilersystem 22 angeschlossen sein. Beispielsweise kann eine Unterdruckverbindung zu den einzelnen Greifeffektoren 18 über jeweils einem Greifeffektor 18 zugeordnete Ventile 24 erfolgen. Dies ermöglicht es, beispielsweise, nicht von einem Werkstück bedeckte Greifeffektoren 18 gezielt zu deaktivieren, indem die zugeordneten Ventile 24 geschlossen werden.

Die Greifvorrichtung 10 weist eine Messeinrichtung 26 auf (in Figuren 1 und 2 skizziert dargestellt), welche zur Messung der elektrischen Kapazität der Anlagefläche 14 ausgebildet ist. Die Messeinrichtung 26 umfasst z.B. eine Auswerteeinrichtung 28 und/oder entsprechende Mikrocontroller und kann in dem Basisteil 12 der Greifvorrichtung 10 integriert sein. Zur Messung der Kapazität ist die Messeinrichtung 26 über eine skizziert dargestellte Messleitung 30 mit der Anlagefläche verbunden. Die Messeinrichtung 26 ist beispielsweise dazu ausgebildet, die Kapazität der Anlagefläche 14 nach einem automatisierten elektrischen Messverfahren zu bestimmen, z.B. durch Ermittlung einer charakteristischen Ladezeit oder durch Ermittlung charakteristischer Frequenzeigenschaften eines Schwingkreises mit der Kapazität der Anlagefläche 14. In der Auswerteeinrichtung 28 können insbesondere Messwerte für Kapazitäten gespeichert werden und Kapazitätsänderungen ermittelt werden. Außerdem kann die Auswerteeinrichtung 28 dazu ausgestaltet sein, Messwerte von Kapazitäten und/oder Kapazitätsänderungen mit ebenfalls in der Auswerteeinrichtung 28 hinterlegten Detektionsschwellwerten zu vergleichen, wie nachfolgend noch näher erläutert.

Für die Messung der Kapazität der Anlagefläche 14 sind verschiedene Vorgehensweisen denkbar. Insbesondere kann vorgesehen sein, dass das Basisteil 12 elektrische geerdet ist, z.B. mittels eines skizziert dargestellten Erdungsanschlusses 32.

Die Anlagefläche 14 wird z.B. von einer elektrisch leitfähigen Platte 34 bereitgestellt. Die Platte 34 kann zum Beispiel aus Metall oder einem anderen elektrisch leitfähigen Material ausgebildet sein. Denkbar ist jedoch auch, dass die Platte 34 mit einer elektrisch leitfähigen Schicht versehen ist. Auf der dem Werkstück zugewandten Seite kann grundsätzlich eine Beschichtung 36 aus einem dielektrischen Material vorgesehen sein (in Figur 2 skizziert angedeutet). Je nach Ausgestaltung des Messverfahrens kann die Anlagefläche 14 gegenüber dem Basisteil 12 elektrisch isoliert sein. Beispielsweise kann zwischen Anlagefläche 14 und Basisteil 12 ein Isolationsabschnitt 38 angeordnet sein, so dass eine elektrisch leitfähige Verbindung insbesondere nur mit der Messeinrichtung 26 besteht.

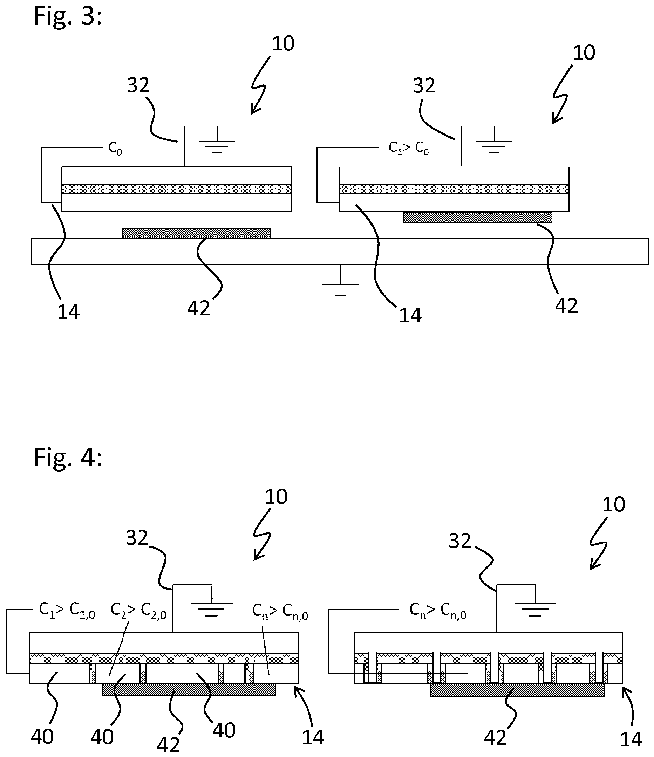

Die Anlagefläche 14 kann eine Mehrzahl von Messzonen 40 aufweisen (vgl. Skizze in Figur 4). Hierzu kann die Anlagefläche durch entsprechende Zwischenisolatoren unterteilt sein. Dadurch können die Messzonen 40 gegeneinander elektrisch isoliert sein. Die Messeinrichtung 26 ist dann vorzugsweise mit den einzelnen Messzonen 40 derart verbunden, dass die Kapazitäten (C₁, C₂, ... Cₙ) der einzelnen Messzonen individuell messbar sind. Denkbar ist auch, dass die Anlagefläche selbst bereichsweise elektrische geerdet ist, insbesondere dass einzelne der Messzonen 40 elektrisch geerdet sind. Beispielsweise kann die Messeinrichtung 26 dann zur Messung der Kapazität ausgebildet sein, welche zwischen einzelnen Messzonen 40 und einzelnen geerdeten Messzonen 40 gebildet ist.

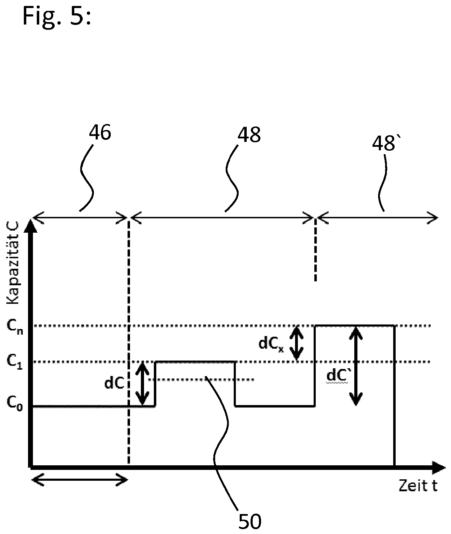

Anhand der Figuren 3 und 5 wird erläutert, wie mit der Greifvorrichtung 10 bei Handhabung eines Werkstückes 42 festgestellt werden kann, ob das Werkstück 42 der Anlagefläche 14 angenähert ist und/oder ob das Werkstück 42 an der Anlagefläche 14 anliegt.

Zur Ausgestaltung des Messverfahrens kann das Werkstück 42 auf einem Handhabungstisch 44 angeordnet sein. Der Handhabungstisch 44 kann ebenfalle elektrisch geerdet sein. Zunächst kann in einem Kalibrierungszyklus eine Grundkapazität C₀ der Anlagefläche 14 gemessen werden (linke Darstellung in Figur 3). Hierbei ist das Werkstück 42 von der Anlagefläche 14 beabstandet. Ist das Werkstück an die Anlagefläche 14 angenähert oder liegt an dieser an (rechte Darstellung in Figur 3), so verändert sich die elektrische Kapazität der Anlagefläche 14. Eine entsprechende Präsenzkapazität C₁ kann gemessen werden, wobei sich die Präsenzkapazität um eine Kapazitätsänderung dC von der Grundkapazität C₀ unterscheidet.

Ein zugehöriger zeitlicher Verlauf der Kapazitäten ist beispielhaft in der Figur 5 skizziert. Hierbei ist beispielhaft entlang der Zeitachse (Abszisse) zunächst ein Kalibrierungszyklus 46 und hieran anschließend ein Arbeitszyklus 48 und beispielhaft ein weiterer Arbeitszyklus 48' dargestellt. Während des Kalibrierungszyklus 46 wird die Grundkapazität C₀ gemessen. Während der Durchführung des Arbeitszyklus 48 ist das Werkstück 42 zunächst von der Anlagefläche 14 beabstandet, wobei die gemessene Kapazität z.B. im Wesentlichen noch der Grundkapazität C₀ entspricht. Sobald das Werkstück 42 der Anlagefläche 14 angenähert ist, verändert sich die gemessene Kapazität auf den Wert der Präsenzkapazität C₁ um den Wert dC. Nach Ablegen des Werkstückes und Beabstandung der Anlagefläche 14 von dem Werkstück 42 verändert sich die gemessene Kapazität wieder zurück, z.B. auf den Wert C₀.

In dem Arbeitszyklus 48 kann somit die Präsenz eines Werkstückes 42 an der Anlagefläche 14 detektiert werden, wenn die Kapazitätsänderung dC einen Detektionsschwellwert 50 überschreitet. In einem folgenden Arbeitszyklus 48' ist der Fall dargestellt, dass die gemessene Kapazitätsänderung dC' bei Annäherung des Werkstücks 42 an die Anlagefläche 14 einen um die Größe dCx erhöhten Wert dC' annimmt. Dies kann beispielsweise auftreten, wenn das aufzunehmende Werkstück noch mit weiteren Werkstücken verbunden ist oder in einer Anordnung von Werkstücken verklemmt ist, so dass ein abweichender Effekt auf die gemessene Kapazität hervorgerufen wird. Das Verfahren ermöglicht somit die Überwachung, ob das Werkstück 42 zuverlässig gegriffen wird.

Bei entsprechender Ausgestaltung ermöglicht die Greifvorrichtung 10 und das genannte Verfahren auch eine Feststellung, an welchen Bereichen der Anlagefläche 14 ein Werkstück 42 anliegt. Hierzu kann z.B. eine Anlagefläche 14 mit mehreren elektrisch gegeneinander isolierten Messzonen 40 vorgesehen sein (vgl. Fig. 4). Für jede der Messzonen 40 kann z.B. eine individuelle Grundkapazität C_{1, 0}, C_{2, 0}, ... C_{n, 0} und Präsenzkapazitäten C₁, C₂, ... Cₙ sowie zugeordnete Kapazitätsänderungen dCₙ ermittelt werden. Denkbar ist auch, dass einzelne der Messzonen 40 nicht überwacht werden, sondern beispielsweise elektrisch geerdet sind. Für jede der überwachten Messzonen 40 kann die Kapazitätsänderung wie in Zusammenhang mit Figur 5 erläutert überwacht werden und so festgestellt werden, ob das Werkstück 42 an der jeweiligen Messzone 40 anliegt beziehungsweise diese angenähert ist.

## Patentansprüche

1. Greifvorrichtung (10) mit einem Basisteil (12) und mit einer Anlagefläche (14), an welche ein Werkstück (42) zum Greifen heranführbar ist, und mit an der Anlagefläche (14) vorgesehenen Greifmitteln (16) zur Ausübung einer Haltekraft auf das Werkstück (42), **dadurch gekennzeichnet, dass** die Anlagefläche (14) als plattenartiges Bauteil aus einem elektrisch leitfähigen Material ausgebildet ist und dass eine Messeinrichtung (26) vorgesehen ist, welche zur Messung der elektrischen Kapazität der Anlagefläche (14) gegenüber dem Basisteil (12) ausgebildet ist, wobei die Anlagefläche (14) gegenüber dem Basisteil (12) elektrisch isoliert ist.

2. Greifvorrichtung (10) nach einem der vorherigen Ansprüche, **dadurch gekennzeichnet, dass** das Basisteil (12) elektrisch geerdet ist.

3. Greifvorrichtung (10) nach einem der vorherigen Ansprüche, **dadurch gekennzeichnet, dass** die Anlagefläche (14) mehrere Messzonen (40) aufweist, welche elektrisch gegeneinander isoliert sind.

4. Greifvorrichtung (10) nach Anspruch 3, **dadurch gekennzeichnet, dass** die Messeinrichtung (26) derart ausgebildet ist, dass Kapazität (C₀, C₁, Cₙ) verschiedener Messzonen (40) unabhängig voneinander messbar ist.

5. Greifvorrichtung (10) nach Anspruch 4, **dadurch gekennzeichnet, dass** eine oder mehrere der Messzonen (40) elektrisch geerdet sind.

6. Greifvorrichtung (10) nach einem der vorherigen Ansprüche, **dadurch gekennzeichnet, dass** die Anlagefläche (14) eine Beschichtung (36) mit einem dielektrischen Material aufweist.

7. Greifvorrichtung (10) nach einem der vorherigen Ansprüche, **dadurch gekennzeichnet, dass** die Greifmittel (46) eine Vielzahl von an der Anlagefläche (14) angeordneten Greifeffektoren (18) umfassen.

8. Greifvorrichtung (10) nach einem der vorherigen Ansprüche, **dadurch gekennzeichnet, dass** eine Auswerteinrichtung (28) vorgesehen ist, in welcher Messwerte für Kapazitäten speicherbar sind und/oder mittels welcher Änderungen der Kapazität (dC, dC') ermittelbar sind.

9. Verfahren zum Betreiben einer Greifvorrichtung aufweisend ein Basisteil (12) und eine Anlagefläche (14), die als plattenartiges Bauteil aus einem elektrisch leitfähigen Material ausgebildet ist und mit an der Anlagefläche (14) vorgesehenen Greifmitteln (16) zum Greifen eines Werkstückes,
wobei bei dem Verfahren wenigstens ein Kalibrierungszyklus (46) und wenigstens ein Arbeitszyklus (48) durchgeführt wird,
wobei der Kalibrierungszyklus (46) folgende Schritte umfasst:
- Messung einer Grundkapazität (C₀; C_{1, 0}; C_{2, 0}; C_{n, 0}) der Anlagefläche (14) gegenüber dem Basisteil (12) ohne Präsenz eines Werkstückes (42); wobei die Anlagefläche (14) gegenüber dem Basisteil(12) elektrisch isoliert ist;
und wobei der Arbeitszyklus (48) die folgenden Schritte umfasst:
- Annähern von Anlagefläche (14) und Werkstück (42) aneinander;
- Messung einer Präsenzkapazität (C₀, C₁, Cₙ) der Anlagefläche (14) gegenüber dem Basisteil (12);
- Ermittlung einer Kapazitätsänderung (dC, dC') zwischen Grundkapazität (C₀; C_{1, 0}; C_{2, 0}; C_{n, 0}) und Präsenzkapazität;
- Erzeugung eines Präsenzsignals in Abhängigkeit der Kapazitätsänderung (dC, dC').

10. Verfahren nach Anspruch 9, **dadurch gekennzeichnet, dass** die Präsenzkapazität während des Annäherns und/oder vor oder während des Greifens mit den Greifmitteln (16) gemessen wird.

11. Verfahren nach Anspruch 9 oder 10, **dadurch gekennzeichnet, dass** eine Vielzahl von Arbeitszyklen (48, 48') durchgeführt wird, wobei zwischen einzelnen Arbeitszyklen, insbesondere jeweils nach einer Regelanzahl von Arbeitszyklen, wenigstens ein Kalibrierungszyklus (46) durchgeführt wird.

12. Verfahren nach einem der Ansprüche 9 bis 11, **dadurch gekennzeichnet, dass** mehrere verschiedene Detektionsschwellwerte (50) vorgesehen sind und dass ein Präsenzsignal erzeugt wird, wenn die Kapazitätsänderung (dC) betragsmäßig größer als wenigstens einer der Detektionsschwellwerte (50) ist, wobei die Ausgestaltung des Präsenzsignales abhängig von den überschrittenen Detektionsschwellwerten (50) ist.

## Claims

1. Gripping device (10) comprising a base part (12) and a contact surface (14) toward which a workpiece (42) can be brought for gripping, and comprising gripping means (16) provided on the contact surface (14) for exerting a holding force on the workpiece (42), **characterized in that** the contact surface (14) is designed as a plate-like component made of an electrically conductive material and **in that** a measuring device (26) is provided which is designed to measure the electrical capacitance of the contact surface (14) with respect to the base part (12), the contact surface (14) being electrically insulated with respect to the base part (12).

2. Gripping device (10) according to any of the preceding claims, **characterized in that** the base part (12) is electrically grounded.

3. Gripping device (10) according to any of the preceding claims, **characterized in that** the contact surface (14) has a plurality of measuring zones (40) which are electrically insulated from one another.

4. Gripping device (10) according to claim 3, **characterized in that** the measuring device (26) is designed in such a way that the capacitances (C₀, C₁, Cₙ) of different measuring zones (40) can be measured independently of one another.

5. Gripping device (10) according to claim 4, **characterized in that** one or more of the measuring zones (40) are electrically grounded.

6. Gripping device (10) according to any of the preceding claims, **characterized in that** the contact surface (14) has a coating (36) with a dielectric material.

7. Gripping device (10) according to any of the preceding claims, **characterized in that** the gripping means (46) comprise a plurality of gripping effectors (18) arranged on the contact surface (14).

8. Gripping device (10) according to any of the preceding claims, **characterized in that** an evaluation device (28) is provided in which measuring values for capacitances can be stored and/or by means of which changes in the capacitance (dC, dC') can be determined.

9. Method for operating a gripping device having a base part (12) and a contact surface (14), which is designed as a plate-like component made of an electrically conductive material and having gripping means (16) provided on the contact surface (14) for gripping a workpiece,
wherein at least one calibration cycle (46) and at least one working cycle (48) are carried out in the method,
wherein the calibration cycle (46) comprises the steps of:
- measuring a basic capacitance (C₀; C_{1, 0}; C_{2, 0}; C_{n, 0}) of the contact surface (14) with respect to the base part (12) without the presence of a workpiece (42);
wherein the contact surface (14) is electrically insulated with respect to the base part (12);
and wherein the working cycle (48) comprises the steps of:
- bringing the contact surface (14) and workpiece (42) closer to one another;
- measuring a presence capacitance (C₀, C₁, Cₙ) of the contact surface (14) with respect to the base part (12);
- determining a change in capacitance (dC, dC') between the basic capacitance (C₀; C_{1, 0}; C_{2, 0}; C_{n, 0}) and presence capacitance;
- generating a presence signal on the basis of the change in capacitance (dC, dC').

10. Method according to claim 9, **characterized in that** the presence capacitance is measured during the process of bringing closer and/or before or during gripping with the gripping means (16).

11. Method according to claim 9 or claim 10, **characterized in that** a plurality of working cycles (48, 48') is carried out, at least one calibration cycle (46) being carried out between individual working cycles, in particular after a regular number of working cycles.

12. Method according to any of claims 9 to 11, **characterized in that** a plurality of different detection threshold values (50) are provided and **in that** a presence signal is generated if the change in capacitance (dC) is greater in magnitude than at least one of the detection threshold values (50), the configuration of the presence signal being dependent on the exceeded detection threshold values (50).

## Revendications

1. Dispositif de prise (10) comprenant une partie de base (12) et une surface d'appui (14) contre laquelle on approche une pièce à travailler (42) pour la prendre ainsi que des moyens de préhension (16) prévus sur la surface d'appui (14) pour exercer une force de retenue sur la pièce à travailler (42), dispositif de prise **caractérisé en ce que** la surface d'appui (14) est réalisée comme composant en forme de plaque en un matériau électro-conducteur, et il est prévu une installation de mesure (26) pour mesurer la capacité électrique entre la surface d'appui (14) et la partie de base (12), la surface d'appui (14) étant isolée électriquement de la partie de base (12).

2. Dispositif de prise (10) selon l'une des revendications précédentes, **caractérisé en ce que** la partie de base (12) est reliée à la masse électrique.

3. Dispositif de prise (10) selon l'une des revendications précédentes, **caractérisé en ce que** la surface d'appui (14) comporte plusieurs zones de mesure (40) isolées électriquement les unes des autres.

4. Dispositif de prise (10) selon la revendication 3, **caractérisé en ce que** l'installation de mesure (26) est réalisée pour mesurer indépendamment les unes des autres, la capacité (C₀, C₁, Cₙ) de différentes zones de mesure (40) .

5. Dispositif de prise (10) selon la revendication 4, **caractérisé en ce qu'**une ou plusieurs zones de mesure (40) sont mises à la masse électrique.

6. Dispositif de prise (10) selon l'une des revendications précédentes, **caractérisé en ce que** la surface d'appui (14) comporte un revêtement (36) en un matériau diélectrique.

7. Dispositif de prise (10) selon l'une des revendications précédentes, **caractérisé en ce que** les moyens de préhension (46) comprennent un ensemble d'actionneurs de préhension (18) installés sur la surface d'appui (14).

8. Dispositif de prise (10) selon l'une des revendications précédentes, **caractérisé en ce qu'**il comprend une installation d'exploitation (28) qui enregistre les valeurs de mesure des capacités et/ou permettant de déterminer les variations de capacités (dC, dC').

9. Procédé de fonctionnement d'un dispositif de prise comprenant une partie de base (12) et une surface d'appui (14) constituées comme composants en forme de plaque en un matériau électro-conducteur et des moyens de préhension (16) prévus sur la surface d'appui (14) pour prendre une pièce à travailler,
le procédé appliquant au moins un cycle de calibrage (46) et au moins un cycle de travail (48),
le cycle de calibrage (46) comprenant les étapes suivantes consistant à:
- mesurer une capacité de base (C₀, C_{1, 0}, C_{2, 0}, C_{n, 0}) de la surface d'appui (14) par rapport à la partie de base (12) en l'absence d'une pièce à travailler (42),
la surface d'appui (14) étant isolée électriquement par rapport à la partie de base (12), et
le cycle de travail (48) comprenant les étapes suivantes consistant:
- rapprocher l'une de l'autre, la surface d'appui (14) et la pièce à travailler (42),
- mesurer une capacité de présence (C₀, C₁, Cₙ) de la surface d'appui (14) par rapport à la partie de base (12),
- déterminer une variation de capacité (dC, dC') entre la capacité de base (C₀, C_{1, 0}, C_{2, 0}, C_{n, 0}) et la capacité de présence,
- générer un signal de présence en fonction de la variation de capacité (dC, dC').

10. Procédé selon la revendication 9, **caractérisé en ce que** on mesure la capacité de présence pendant le mouvement d'approche et/ou avant ou pendant la prise avec les moyens de préhension (16).

11. Procédé selon la revendication 9 ou 10, **caractérisé en ce qu'**on exécute un ensemble de cycles de travail (48, 48'), et on effectue au moins un cycle de calibrage (46) entre les différents cycles de travail notamment chaque fois après un nombre réglé de cycles de travail.

12. Procédé selon l'une des revendications 9 à 11, **caractérisé en ce qu'**on prévoit différentes valeurs de détection (50), et on génère un signal de présence si la variation de capacité (dC) est d'amplitude supérieure à au moins l'une des valeurs de détection (50), la réalisation du signal de présence dépendant des valeurs de seuil de détection (50) qui ont été dépassées.
